# EUROPEAN PATENT APPLICATION

(11) **EP 4 825 186 A1**
(43) Date of publication of application: **21.10.2026**
(21) Application number: 25382391.8
(22) Date of filing: 15.04.2025
(51) Int. Cl.: A23G 9/04, C12G 3/06

(54) **WINE-BASED SLUSH COMPOSITION, PROCESS AND SYSTEM FOR ITS PREPARATION**

(71) Applicant: Pacheco García, Alex, 08320 El Masnou (Barcelona) (ES); Garrido Sánchez, Marta, 08320 El Masnou (Barcelona) (ES)
(72) Inventor: Pacheco García, Alex, 08320 El Masnou (Barcelona) (ES); Garrido Sánchez, Marta, 08320 El Masnou (Barcelona) (ES)
(74) Representative: Herrero & Asociados, S.L.

(57) **Abstract**

The present invention relates to the field of food technology, and more particularly to compositions and methods for the preparation of frozen beverages. Specifically, it concerns a wine-based formulation suitable for producing slush-type beverages with improved stability and without the use of synthetic cryoprotectants.

## Description

### FIELD OF THE INVENTION

The present invention relates to the field of food technology, and more particularly to compositions and methods for the preparation of frozen beverages. Specifically, it concerns a wine-based formulation suitable for producing slush-type beverages with improved stability and without the use of synthetic cryoprotectants.

### BACKGROUND OF THE INVENTION

The market for frozen beverages, particularly alcoholic slushes, has grown steadily due to increasing demand for refreshing and novel consumption formats. However, challenges persist in maintaining texture, stability, and flavor integrity, particularly when using ethanol-containing liquids such as wine.

Several patents have addressed similar problems using strong alcohol bases and gelling agents.

For instance, the documents ES2646928 and ES2647911 disclose methods for producing alcoholic sorbets using distilled spirits such as gin or rum, combined with agar-agar and DL-malic acid to allow freezing. These inventions, although effective for cocktails, are not suitable for wine-based matrices and require precise temperature management and cooking steps incompatible with fermented beverages.

Accordingly, there remains a need for a stable, pourable frozen beverage formulation that uses wine as a primary ingredient.

### SUMMARY OF THE INVENTION

The present invention provides an optimized formulation for wine-based slushes, both white and red, which effectively preserves the organoleptic properties of the original wine-specifically its taste, aroma, and color-without significant alteration. The composition ensures chemical, physical, and microbiological stability while delivering a smooth and homogeneous texture. It prevents phase separation and the formation of large ice crystals, thereby enhancing the overall sensory experience. Additionally, the formulation is adaptable to different wine types, allowing flexibility across a variety of market segments.

Conventional wine-based frozen formulations relying on gelling agents such as agar-agar result in textural properties that are inconsistent with the slush format. These gels may be too firm or rubbery and can interfere with the flavor release and overall sensory experience. The invention uses non-gelling hydrocolloids, specifically guar gum and tara gum, to stabilize the matrix and modulate viscosity without gel formation. This enables a slush product with a smooth consistency that maintains the wine's organoleptic integrity and ensures improved freeze-thaw behaviour.

While prior art in frozen alcohol-based products rely primarily on gelling agents or sugar-alcohol interactions to achieve structural integrity, the present invention introduces the systematic use of a food-grade emulsifier as an essential component. This emulsifier plays a critical role in maintaining the microstructural stability of the wine slush, enabling a uniform distribution of wine constituents and enhancing the organoleptic perception through improved texture and flavor release. The emulsifier not only supports viscosity modulation but also acts synergistically with non-gelling hydrocolloids to prevent phase separation and maintain product consistency over time, particularly in ethanol-containing, low-temperature environments.

The first aspect of the invention refers to a composition for preparing a wine-based slush beverage, comprising:
wine in a range from 40% to 80% by weight/total weight composition,
mineral water in a range from 5% to 50% by weight/total weight composition,
at least one sweetener in a range from 0.1% to 10% by weight/total weight composition,
at least one non-gelling hydrocolloids selected from guar gum, tara gum, locust bean gum, xanthan gum and konjac gum in a range from 0.001% to 1% by weight/total weight composition, and
at least an emulsifier in a range from 0.001% to 1% by weight/total weight composition.

The composition is free of agar-agar and synthetic polyols.

Non-gelling hydrocolloids, as referred to in the present invention, are hydrophilic polysaccharide-based compounds that, when dispersed in an aqueous or hydroalcoholic medium, increase viscosity and provide structural stabilization without forming a rigid or elastic gel network. Unlike gelling agents such as agar-agar, gelatin, or carrageenan, non-gelling hydrocolloids do not undergo a sol-gel transition under standard processing or storage conditions. Instead, they act primarily as thickeners and stabilizers, improving homogeneity, reducing phase separation, and enhancing mouthfeel in semi-solid or slush formulations. Examples include, but are not limited to, guar gum, tara gum, locust bean gum, and similar plant-derived galactomannans. Other non-gelling hydrocolloids that may be functionally equivalent include xanthan gum, konjac gum, or mixtures thereof with plant galactomannans such as guar gum or locust bean gum. These alternatives also enhance stability and texture without forming gelled structures.

The manufacturing process associated with the present invention is designed to preserve the sensory integrity of wine while ensuring the functional stability of the resulting slush. The method incorporates a controlled dispersion phase, followed by gentle integration of the wine, minimizing the degradation of volatile and aromatic compounds. Processing under precise agitation and temperature conditions enables the formation of a consistent, stable slush matrix. The method is also scalable and compatible with standard packaging technologies, ensuring quality preservation and efficient commercial application.

A process for preparing a slush beverage, comprising the steps:
a) dissolving sweeteners, hydrocolloids, and optional additives in mineral water using high-shear mixing at 1200 to 1500 rpm;
b) incorporating wine into the aqueous mixture under agitation
c) packaging the resulting mixture in a sealed container and
d) freezing the mixture at a temperature between -6°C and -10°C with mechanical agitation until a slush texture is formed; optionally if the water is in an amount ranging from 5% to 10% by weight/total weight of the composition diluting until the water is in an amount ranging from 10% to 50% by weight/total weight of the composition.

In a further aspect, the invention provides an integrated system for the production and dispensing of wine-based slush beverages. The system comprises: a composition as defined in the first aspect of the invention inside a Bag-in-Box (BiB) packaging unit optionally filled under inert gas atmosphere to protect the organoleptic properties of the wine-based formulation, and a freezing and dispensing device equipped with programmable mechanical agitation and operating at temperatures between -6°C and - 10°C.

This system ensures the continuous production and maintenance of a homogeneous slush texture, preventing phase separation and ice crystal growth during service. The dispensing unit can be integrated into self-service or high-throughput commercial environments such as hotels, bars, and event venues, enabling efficient and hygienic distribution of the product with consistent quality.

### DETAILED DESCRIPTION OF THE INVENTION

As it is described above the first aspect of the invention refers to a composition for preparing a wine-based slush beverage, comprising:
wine in a range from 40% to 85% by weight/total weight composition,
mineral water in a range from 5% to 50% by weight/total weight composition,
at least one sweetener in a range from 0.1% to 10% by weight/total weight composition,
at least one non-gelling hydrocolloids selected from guar gum, tara gum, locust bean gum xanthan gum and konjac gum in a range from 0.001% to 1% by weight/total weight composition, and
at least an emulsifier in a range from 0.001% to 1% by weight/total weight composition.

Preferably the wine is selected from white wine or red wine. Preferably the wine is in a range from 70% to 85% by weight/total weight composition. Preferably the water is in a range from 10% to 20% by weight/total weight composition.

Preferably, the mineral water is present in an amount ranging from 5% to 10% by weight/total weight of the composition. In this configuration, the composition is designed as a concentrate, intended to be diluted with water prior to freezing. This allows for easier handling, storage, and customization of the final slush beverage consistency at the point of use.

Preferably the non-gelling hydrocolloids is selected from guar gum, tara gum and locust bean gum.

Preferably the sweetener selected from agave syrup, honey, and/or erythritol.

Particularly suitable emulsifiers for this purpose are phospholipid-based compounds, such as sunflower lecithin, soy lecithin, or rapeseed lecithin, which are compatible with hydroalcoholic systems and effective in maintaining homogeneity in semi-solid matrices under sub-zero conditions. The use of sunflower lecithin is especially advantageous due to its natural origin, allergen-free profile, and performance in achieving smooth and stable textures without inducing gelation.

In certain embodiments, the formulation may optionally include one or more additives selected from antioxidants and preservatives, which serve to enhance the chemical and microbiological stability of the product. Suitable antioxidants include vitamin C (ascorbic acid), which helps prevent oxidation of wine constituents, particularly phenolic compounds, thereby preserving color and aroma during storage. To further extend shelf life and inhibit microbial growth, potassium sorbate and potassium metabisulfite may be included at low concentrations. These preservatives are commonly used in oenological applications and are compatible with the preservation of the organoleptic characteristics of the wine-based matrix, without imparting off-flavors or compromising product safety.

To further refine the sensory profile of the wine slush, the formulation may optionally include one or more flavor enhancers. These compounds serve to elevate the aromatic complexity and improve the overall mouthfeel of the product. Examples include orange blossom water, which imparts subtle floral notes particularly suited to white wine variants; natural vanillin, which contributes smooth, creamy undertones; and sea salt, used in small amounts to enhance flavor perception and balance sweetness. The inclusion of these enhancers allows for fine-tuning of the sensory experience without masking the inherent characteristics of the wine.

The second aspect refers to a process for preparing a slush beverage of the first aspect of the invention, comprising the steps:
a) dissolving sweeteners, hydrocolloids, and optional additives in mineral water using high-shear mixing at 1200 to 1500 rpm;
b) incorporating wine into the aqueous mixture under agitation
c) packaging the resulting mixture in a sealed container and
d) freezing the mixture at a temperature between -6°C and -10°C with mechanical agitation until a slush texture is formed;
optionally if the water is in an amount ranging from 5% to 10% by weight/total weight of the composition diluting until the water is in an amount ranging from 10% to 50% by weight/total weight of the composition.

According to one preferred embodiment, the packaging step is carried out using a Bag-in-Box container, optionally under protective gas flushing, which helps minimize oxygen exposure and preserve the wine's aroma and color.

In another embodiment, the freezing step is performed under mechanical agitation at a mixing rate ranging from 20 rpm to 50 rpm, which contributes to the formation of a fine, homogeneous slush texture and prevents the development of large ice crystals.

In yet another embodiment, the sweeteners, hydrocolloids, and optional additives are first dissolved in mineral water at a temperature between 15°C and 25°C, ensuring optimal dispersion and preventing premature thickening prior to wine incorporation.

Preferably, the wine is added gradually over a period of 1 to 5 minutes while maintaining continuous agitation, thereby minimizing the loss of volatile aromatic compounds and ensuring a uniform distribution of wine constituents throughout the matrix.

### Examples of the invention

The following examples are provided to further illustrate the invention and should not be construed as limiting the scope thereof.

### Example 1. Composition of White Wine Slush

| Ingredient | Nominal Quantity (g) | %in Formula weight/total weight of the composition |
|---|---|---|
| White Wine | 1500 | 77.892 |
| Mineral Water | 300 | 15.578 |
| Agave Syrup | 25 | 1.298 |
| Honey | 24 | 1.246 |
| Erythritol | 40 | 2.077 |
| Guar Gum | 0.9 | 0.047 |
| Tara Gum | 0.7 | 0.036 |
| Sea Salt | 0.37 | 0.019 |
| Sunflower Lecithin | 0.8 | 0.042 |
| Orange Blossom Water | 6.4 | 0.332 |
| Vitamin C | 0.6 | 0.031 |
| Potassium Sorbate | 0.375 | 0.019 |
| Potassium Metabisulfite | 0.39 | 0.020 |
| Natural Vanillin | 0.22 | 0.011 |

### Example 2. Composition of Red Wine Slush

| Ingredient | Nominal Quantity (g) | %in Formula weight/total weight of the composition |
|---|---|---|
| Red Wine | 1500 | 79.815 |
| Mineral Water | 300 | 15.963 |
| Agave Syrup | 35 | 1.862 |
| Erythritol | 40 | 2.128 |
| Guar Gum | 0.9 | 0.048 |
| Tara Gum | 0.7 | 0.037 |
| Sea Salt | 0.5 | 0.027 |
| Sunflower Lecithin | 0.8 | 0.043 |
| Vitamin C | 0.375 | 0.020 |
| Potassium Sorbate | 0.375 | 0.020 |
| Potassium Metabisulfite | 0.39 | 0.021 |
| Natural Vanillin | 0.3 | 0.016 |

## Claims

1. A composition for preparing a wine-based slush beverage, comprising:
wine in a range from 40% to 80% by weight/total weight composition,
mineral water in a range from 5% to 50% by weight/total weight composition,
at least one sweetener in a range from 0.1% to 10% by weight/total weight composition,
at least one non-gelling hydrocolloids selected from guar gum, tara gum, locust bean gum xanthan gum and konjac gum in a range from 0.001% to 1% by weight/total weight composition, and
at least an emulsifier in a range from 0.001% to 1% by weight/total weight composition.

2. The composition according to claim 1, wherein the wine is selected from white wine or red wine.

3. The composition according to claim 1 or 2, wherein the wine is present in an amount ranging from 70% to 85% by weight of the total composition.

4. The composition according to any one of claims 1 to 3, wherein the mineral water is present in an amount ranging from 5% to 10% by weight of the total composition.

5. The composition according to any one of claims 1 to 4, wherein the sweetener is selected from agave syrup, honey, and erythritol.

6. The composition according to any one of claims 1 to 5, wherein the emulsifier is a phospholipid-based compound selected from sunflower lecithin, soy lecithin, and rapeseed lecithin.

7. The composition according to claim 6, wherein the emulsifier is sunflower lecithin.

8. The composition according to any one of claims 1 to 7, further comprising one or more additives selected from antioxidants and preservatives.

9. The composition according to claim 8, wherein the antioxidant is vitamin C (ascorbic acid).

10. The composition according to claim 8 or 9, wherein the preservative is selected from potassium sorbate and potassium metabisulfite.

11. The composition according to any one of claims 1 to 10, further comprising one or more flavor enhancers selected from orange blossom water, natural vanillin, and sea salt.

12. A process for preparing a frozen slush beverage comprising the steps:
a) dissolving sweeteners, hydrocolloids, and optional additives in mineral water using high-shear mixing at 1200 to 1500 rpm;
b) incorporating wine into the aqueous mixture under agitation;
c) packaging the resulting mixture in a sealed container, and
d) freezing the mixture at a temperature between -6°C and -10°C with mechanical agitation until a slush texture is formed; optionally if the water is in an amount ranging from 5% to 10% by weight/total weight of the composition diluting until the water is in an amount ranging from 10% to 50% by weight/total weight of the composition.

13. The process according to claim 12, wherein the freezing is conducted in a mixing rate of from 20 rpm to 50 rpm.

14. The process according to any one of claims 12 to 13, wherein the sweeteners, hydrocolloids, and optional additives are pre-mixed in mineral water at a temperature between 15°C and 25°C prior to the addition of wine.

15. The process according to any one of claims 12 to 14, wherein the wine is added slowly over a period of 1 to 5 minutes under continuous agitation to minimize the loss of volatile aromatic compounds.

16. A system comprises: a composition as defined in the claims 1 to 11of the inside a Bag-in-Box (BiB) packaging unit optionally filled under inert gas atmosphere and a freezing and dispensing device equipped with programmable mechanical agitation and operating at temperatures between -6°C and -10°C.
